# EUROPEAN PATENT APPLICATION

(11) **EP 4 791 073 A1**
(43) Date of publication of application: **12.08.2026**
(21) Application number: 24881744.7
(22) Date of filing: 25.10.2024
(51) Int. Cl.: H04W 28/02

(54) **COMMUNICATION METHOD AND RELATED APPARATUS**

(30) Priority: 27.10.2023 CN 202311426915
(71) Applicant: HUAWEI TECHNOLOGIES CO., LTD., Shenzhen, Guangdong 518129 (CN)
(72) Inventor: PENG, Wenjie, Shenzhen, Guangdong 518129 (CN); PAN, Xiaodan, Shenzhen, Guangdong 518129 (CN)
(74) Representative: Isarpatent
(86) International application number: PCT/CN2024/127358
(87) International publication number: WO 2025/087384

(57) **Abstract**

This application provides a communication method and a communication apparatus, applied to the field of communication technologies. In the technical solutions provided in this application, a first network device receives a first splitting policy from a first core network element, where the first splitting policy indicates a QoS flow that is in a first PDU session and that is split to the first network device and/or a data volume that is of a QoS flow in the first PDU session and that is split to the first network device; and determines a first capability according to the first splitting policy, where the first capability is a capability that is in a capability of the first UE and that can enable the first network device to ensure the first splitting policy. In this application, in a core network splitting mechanism, a data transmission rate of UE is effectively increased.

## Description

This application claims priority to Chinese Patent Application No. 202311426915.4, filed with the China National Intellectual Property Administration on October 27, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

When there is no interface between base stations to support dual connectivity of UE or a base station capability does not support dual connectivity of UE, a core network splitting mechanism is proposed in the communication field, to improve a data transmission rate of the UE. The core network splitting mechanism means that UE may separately perform data transmission with a core network through two base stations, and the UE may separately establish a control plane connection to the core network through the two base stations. There may be one or two core networks.

However, no technical solution that needs to be executed by each network element or device in a communication system in the core network splitting mechanism is provided in the communication field.

### SUMMARY

This application provides a communication method, a communication apparatus, and a communication system, to implement a core network splitting mechanism, thereby improving a data transmission rate of UE.

According to a first aspect, this application provides a communication method. The method is applied to a first network device. The method includes: receiving first indication information from an SMF entity, where the first indication information indicates at least one of the following information: transmission of a first QoS flow to be stopped in a first PDU session, transmission of a second QoS flow to be added to the first PDU session, or an updated QoS parameter of a third QoS flow in the first PDU session, and the first PDU session is a PDU session for transmission of service data of the first terminal through the first network device; and determining a first capability based on the first indication information, where the first capability is a capability that is of the first terminal and that is required by the first network device, and the first capability is a subset of a total capability of the first terminal.

In this implementation, the first PDU session may be a PDU session that has been established by a network device and that is for transmission of related service data of the first terminal through the first network device, and the first indication information indicates updated information about the first PDU session. A reason for updating the information about the first PDU session may be splitting the service data of the first terminal, for example, splitting the service data of the first terminal. In other words, a part of the service data of the first terminal is transmitted through the first network device, the other part of the data of the first terminal is transmitted through the second network device.

In this method, the first network device can receive the first indication information sent by the SMF entity, to obtain, after splitting is performed on a core network side, the updated information that is of the first PDU session associated with the first network device and that is used by the service data of the first terminal. Therefore, the first network device can determine a terminal capability required by the first network device to transmit a part of the service data of the first terminal, so that implementation of a splitting policy on the core network side can be achieved on the access network side with technical support.

In some possible implementations, the first network device sends first capability information to the first terminal, where the first capability information indicates the first capability. In this implementation, after determining the first capability, the first network device notifies the first terminal, so that the first terminal can receive or send the service data of the first terminal based on the first capability, and implementation of the splitting policy on the core network side can be achieved on a terminal side with technical support.

In some possible implementations, the first network device receives second capability information from the first terminal, where the second capability information indicates a capability that is determined by the first terminal and that is used to communicate with the first network device.

In this implementation, the first network device may indicate, to the first terminal, the first capability recommended by the first network device, and also receive, from the first terminal, a capability that can be used by the first network device and that is recommended by the first terminal, so that a capability of the first terminal used by the first network device better meets a transmission capability of the first terminal and a requirement capability of the service data of the first terminal.

In some possible implementations, information about the second network device is received, where there is a communication connection between the second network device and the first terminal; and the determining the first capability based on the first indication information includes: determining the first capability based on the first indication information and the information about the second network device.

In this implementation, when determining the capability of the first terminal required by the first network device for splitting, the first network device may further determine, based on a capability of the second network device relevant to the splitting, the capability of the first terminal required by the first network device, and fully consider a transmission capability of the second network device, so that the first capability determined by the first network device can better meet the splitting policy of the core network.

According to a second aspect, this application provides a communication method. The method is applied to a session management function SMF entity. The method includes: The SMF entity determines first indication information, where the first indication information indicates at least one of the following information: transmission of a first QoS flow to be stopped in a first PDU session, transmission of a QoS flow to be added to the first PDU session, or an updated QoS parameter of a third QoS flow in the first PDU session, and the first PDU session is a PDU session for transmission of service data of a first terminal through a first network device and a first user plane function UPF entity; and the first indication information is sent to at least one of the first network device, the first terminal, a first mobility management AMF entity, and the first UPF entity, where the first AMF entity is an AMF entity associated with the first PDU session.

In this method, the SMF entity sends the first indication information to the first AMF entity, so that the first AMF entity can notify the first indication information to one or more of the first network device, the first terminal, and the first UPF entity.

In this method, the SMF entity sends the first indication information to one or more of the first network device, the first terminal, and the first UPF entity, so that these devices can cooperate with a core network based on the first indication information to split the service data of the first terminal.

In some possible implementations, second indication information is sent to at least one of a second network device, the first terminal, a second AMF entity, or a second UPF entity, where the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the second PDU session is a PDU session for transmission of the service data of the first terminal through the second network device and the second UPF entity, and the second AMF entity is an AMF entity associated with the second PDU session.

In this method, the SMF entity sends the first indication information to the second AMF entity, so that the second AMF entity can notify the second indication information to one or more of the second network device, the first terminal, and the second UPF entity.

In this method, the SMF entity sends the second indication information to one or more of the second network device, the first terminal, and the second UPF entity, so that these devices can cooperate with a core network based on the second indication information to split the service data of the first terminal.

In some possible implementations, the first AMF entity and the second AMF entity may be a same AMF entity.

Optionally, the first AMF entity and the second AMF entity are not a same AMF entity. For example, the first AMF entity and the second AMF entity belong to different core networks.

Optionally, there is a communication connection between the first UPF and the second UPF. For example, the first UPF entity and the second UPF entity belong to different core networks, or the first UPF and the second UPF entity are a same UPF entity.

According to a third aspect, this application provides a communication method. The method is applied to a first terminal. The method includes: receiving first indication information from an SMF entity, where the first indication information indicates at least one of the following information: transmission of a first QoS flow to be stopped in a first PDU session, transmission of a second QoS flow to be added to the first PDU session, or an updated QoS parameter of a third QoS flow in the first PDU session, and the first PDU session is a PDU session for transmission of service data of the first terminal through a first network device; determining a first capability based on the first indication information, where the first capability is a capability that is of the first terminal and that is required by the first network device, and the first capability is a subset of a total capability of the first terminal; and sending first capability information to the first network device, where the first capability information indicates the first capability.

In this method, the first terminal can receive the first indication information sent by the SMF entity, to obtain, after splitting is performed on a core network side, the updated information that is of the first PDU session associated with the first network device and that is used by the service data of the first terminal. Therefore, the first terminal can determine a terminal capability required by the first network device to transmit a part of the service data of the first terminal and indicate the terminal capability to the first network device, so that implementation of a splitting policy on the core network side can be achieved on the access network side with technical support.

In some possible implementations, the first terminal receives data that is in a seventh QoS flow and that is transmitted through the first network device, where the seventh QoS flow is a QoS flow in the first PDU session.

In some possible implementations, second indication information is received from the SMF entity, where the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the fourth QoS flow is used for transmission of service data transmitted using the first QoS flow, the second QoS flow is used for transmission of service data transmitted using the fifth QoS flow, a QoS parameter difference between the updated QoS parameter of the sixth QoS flow and the QoS parameter before updating is used for transmission of service data transmitted using a QoS parameter difference between an updated QoS parameter of the first QoS flow and the QoS parameter before updating, or a QoS parameter difference between an updated QoS parameter of the first QoS flow and the QoS parameter before updating is used for transmission of service data transmitted using a QoS parameter difference between the updated QoS parameter of the sixth QoS flow and the QoS parameter before updating, and the second PDU session is a PDU session for transmission of service data of the first terminal through a second network device; a second capability is determined based on the second indication information, where the second capability is a capability that is of the first terminal and that is required by the second network device, and the second capability is a subset of a total capability of the second terminal; and second capability information is sent to the second network device, where the second capability information indicates the second capability.

In this method, the first terminal can receive the second indication information sent by the SMF entity, to obtain, after splitting is performed on a core network side, information that is of a QoS flow associated with the second network device and that is used by the service data of the first terminal. Therefore, the first terminal can determine a terminal capability required by the first network device to transmit a part of the service data of the first terminal and indicate the terminal capability to the second network device, so that implementation of a splitting policy on the core network side can be achieved on the access network side with technical support.

In some possible implementations, data that is in an eighth QoS flow and that is transmitted through the second network device is received, where the eighth QoS flow is a QoS flow in the second PDU session.

According to a fourth aspect, this application provides a communication method. The method is applied to a first network device. The method includes: receiving first capability information from a first terminal, where the first capability information indicates a first capability, the first capability is a capability that is of the first terminal and that is required by the first network device, the first capability is a subset of a total capability of the first terminal, the first network device is a network device in a first PDU session, and the first PDU session is a PDU session for transmission of service data of the first terminal; and sending first indication information to a session management function SMF entity based on the first capability information, where the first indication information indicates at least one of the following information determined by the first network device: transmission of a first QoS flow to be stopped in the first PDU session, transmission of a second QoS flow to be added to the first PDU session, or an updated QoS parameter of a third QoS flow in the first PDU session.

In this method, the first network device receives the first capability information, to obtain, after splitting is performed on a core network side, a terminal capability that is recommended by the first terminal and that is required by the first network device to transmit a part of the service data of the first terminal, and notifies the SMF entity of a splitting policy (the first indication information) formulated based on the terminal, so that implementation of the splitting policy can be achieved on an access network side and a core network side with technical support.

In some possible implementations, third indication information is received from the SMF entity, where the third indication information indicates at least one of the following information determined by the SMF entity: transmission of the first QoS flow to be stopped in the first PDU session, transmission of the second QoS flow to be added to the first PDU session, or the updated QoS parameter of the third QoS flow in the first PDU session.

In this implementation, the first network device may not only indicate, to the core network side, the splitting policy recommended by the first network device, but also receive, from the core network side, the splitting policy recommended by the core network side, so that the splitting policy used by the first network device better meets a network transmission environment.

In some possible implementations, data that is in a seventh QoS flow and that is transmitted through a first UPF entity is received, where the seventh QoS flow is a QoS flow in the first PDU session, and the first UPF entity is a UPF entity in the first PDU session; and data in the seventh QoS flow is sent to the first terminal.

According to a fifth aspect, this application provides a communication method. The method is applied to an SMF entity. The method includes: receiving first indication information from a first network device, where the first indication information indicates at least one of the following information determined by the first network device: transmission of a first QoS flow to be stopped in a first PDU session, transmission of a second QoS flow to be added to the first PDU session, or an updated QoS parameter of a third QoS flow in the first PDU session, and the first PDU session is a PDU session for transmission of service data of the first terminal through the first network device and a first UPF entity; and sending third indication information to the first UPF entity based on the first indication information, where the third indication information indicates at least one of the following information determined by the SMF entity: indication information of the first QoS flow, indication information of the second QoS flow, or the updated QoS parameter of the third QoS flow.

In this method, the SMF entity obtains the first indication information recommended by the first network device, and sends the first indication information to the first UPF entity, so that these devices can cooperate with a core network based on the first indication information to split the service data of the first terminal.

In some possible implementations, second indication information is sent to a second UPF entity, where the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, and the second PDU session is a PDU session for transmission of service data of the first terminal through a second network device and the second UPF entity.

In this method, the SMF entity obtains the first indication information, and sends the first indication information to the second UPF entity, so that these devices can cooperate with a core network based on the second indication information to split the service data of the first terminal.

Optionally, there is a communication connection between the first UPF and the second UPF. For example, the first UPF entity and the second UPF entity belong to different core networks, or the first UPF and the second UPF entity are a same UPF entity.

According to a sixth aspect, this application provides a communication method. The method is applied to a first UPF entity. The method includes: receiving first indication information from an SMF entity, where the first indication information indicates at least one of the following information: transmission of a first QoS flow to be stopped in a first PDU session, transmission of a second QoS flow to be added to the first PDU session, or an updated QoS parameter of a third QoS flow in the first PDU session, and the first PDU session is a PDU session for transmission of service data of the first terminal through the first UPF entity and a first network device; receiving first service data from a data network DN, where the first service data is the service data of the first terminal; and sending data in a seventh QoS flow to the first network device, where the data in the seventh QoS flow includes the first service data, and the seventh QoS flow is a QoS flow in the first PDU session.

In this method, the first UPF entity receives the first indication information, to determine an operation that should be performed by the first UPF entity to implement a splitting policy indicated by the first indication information.

In some possible implementations, second indication information from the SMF entity is received, where the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the fourth QoS flow is used for transmission of service data transmitted using the first QoS flow, the second QoS flow is used for transmission of service data transmitted using the fifth QoS flow, a QoS parameter difference between the updated QoS parameter of the sixth QoS flow and the QoS parameter before updating is used for transmission of service data transmitted using a QoS parameter difference between an updated QoS parameter of the first QoS flow and the QoS parameter before updating, or a QoS parameter difference between an updated QoS parameter of the first QoS flow and the QoS parameter before updating is used for transmission of service data transmitted using a QoS parameter difference between the updated QoS parameter of the sixth QoS flow and the QoS parameter before updating, and the second PDU session is a PDU session for transmission of service data of the first terminal through the first UPF entity and a second network device; second service data is received from the data network DN, where the second service data is service data of the first terminal; and data in an eighth QoS flow is sent to the second network device, where the data in the eighth QoS flow includes the second service data, and the eighth QoS flow is a QoS flow in the second PDU session.

In this method, splitting performed on the first network device and the second network device is implemented on the first UPF entity.

In some possible implementations, that the first indication information indicates transmission of the first QoS flow to be stopped in the first PDU session includes: the first indication information includes deactivation indication information of the first QoS flow, or indication information for deleting the first QoS flow; that the first indication information indicates the updated QoS parameter of the third QoS flow includes: the first indication information includes at least one of the following information: a proportion of an updated AMBR of the second QoS flow to the AMBR before updating, a proportion of an updated transmission rate of the second QoS flow to the transmission rate before updating of the second QoS flow, the updated transmission rate of the second QoS flow, or the updated AMBR of the second QoS flow; and that the first indication information indicates transmission of the second QoS flow to be added to the first PDU session includes: the first indication information includes activation indication information of the second QoS flow, or indication information for adding the second QoS flow.

In this method, splitting performed on the first network device and the second UPF entity is implemented on the first UPF entity, so that the second UPF entity can transmit the service data of the first terminal to the second network device.

In any one of the foregoing aspects, optionally, that the first indication information indicates transmission of the first QoS flow to be stopped in the first PDU session may include: the first indication information includes deactivation indication information of the first QoS flow, or indication information for deleting the first QoS flow.

That the first indication information indicates the updated QoS parameter of the third QoS flow may include: the first indication information includes at least one of the following information: a proportion of an updated AMBR of the second QoS flow to the AMBR before updating, a proportion of an updated transmission rate of the second QoS flow to the transmission rate before updating of the second QoS flow, the updated transmission rate of the second QoS flow, or the updated AMBR of the second QoS flow.

That the first indication information indicates transmission of the second QoS flow to be added to the first PDU session may include: the first indication information includes activation indication information of the second QoS flow, or indication information for adding the second QoS flow.

According to a seventh aspect, this application provides a communication apparatus, including a module or a unit configured to implement the method in any one of the first aspect to the sixth aspect. It should be understood that each module or unit may implement a corresponding function by executing a computer program.

According to an eighth aspect, this application provides a communication apparatus, including a processor. The processor is configured to perform the communication method in any one of the possible implementations of the first aspect to the sixth aspect. The communication apparatus may be a chip or a chip system used in a terminal device and a network device. The apparatus may further include a memory configured to store instructions and data. The memory is coupled to the processor. When the processor executes the instructions stored in the memory, the methods described in the foregoing aspects may be implemented. The apparatus may further include a communication interface. The communication interface is used by the apparatus to communicate with another device. For example, the communication interface may be a transceiver, a circuit, a bus, a module, or another type of communication interface.

According to a ninth aspect, this application provides a computer-readable storage medium. The computer-readable storage medium stores program code to be executed by a communication apparatus, and the program code includes instructions for implementing the method in any on of the first aspect to the sixth aspect.

According to a tenth aspect, this application provides a computer program product including instructions. When the computer program product is run on a communication apparatus, the communication apparatus is caused to perform the method in any one of the first aspect to the sixth aspect.

### BRIEF DESCRIPTION OF DRAWINGS

FIG. 1 is a diagram of an application architecture of a 5G network system according to an embodiment of this application;
FIG. 2A to FIG. 2C are diagrams of core network splitting scenarios to which a method according to an embodiment of this application is applicable;
FIG. 3 is a diagram of a process of negotiating QoS and a UE capability;
FIG. 4A to FIG. 4C are diagrams of service data splitting in a core network according to an embodiment of this application;
FIG. 5A and FIG. 5B are diagrams of splitting in a data network according to this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a diagram of a structure of a communication apparatus according to an embodiment of this application; and
FIG. 10 is a diagram of a structure of a communication apparatus according to another embodiment of this application.

### DESCRIPTION OF EMBODIMENTS

The following describes technical solutions in embodiments of this application with reference to the accompanying drawings in embodiments of this application.

To clearly describe technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity and an execution sequence, and the terms such as "first" and "second" do not limit a definite difference.

It should be noted that, in embodiments of this application, the terms such as "example" or "for example" are used to represent giving an example, an illustration, or a description. In this application, any embodiment or design scheme described with "example" or "for example" should not be explained as being more preferred or having more advantages than another embodiment or design scheme. To be precise, the terms such as "example" or "for example" are used to present a related concept in a specific manner.

In embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" represents an "or" relationship between the associated objects. "At least one of the following items (pieces)" or a similar expression thereof indicates any combination of these items, and includes a singular item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions provided in this application may be applied to various communication systems, for example, a 5th generation (5th generation, 5G) or new radio (new radio, NR) communication system, a long term evolution (long term evolution, LTE) system, a terrestrial communication system (terrestrial networks, TN), a non-terrestrial network (non-terrestrial network, NTN), and a future communication system, such as a 6th generation (6th generation, 6G) mobile communication system, or a converged system of a plurality of systems.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device. It may be understood that the terminal device and the network device in this application jointly perform a corresponding communication method in this application.

To facilitate understanding of the communication method provided in embodiments of this application, the following describes a system architecture and an application scenario of the communication method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

In embodiments of this application, the network device may be a device configured to communicate with the terminal device, and the network device may include an access network device or a radio access network device, for example, a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission point (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). A specific technology and a specific device form that are used by the network device are not limited in embodiments of this application. In some deployments, the network device mentioned in embodiments of this application may be a device including a CU or a DU or including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In addition, the network device alternatively includes a core network device, which is mainly configured to provide a user connection, manage a user, and complete a service bearer. The network device may serve as a bearer network to provide an interface to an external network, to process and distribute a service in an entire network.

In embodiments of this application, the network device may be replaced with an apparatus that can support the network device in implementing the function, for example, a chip system, a hardware circuit, a software module, or a hardware circuit plus a software module. The apparatus may be mounted in the network device or used in cooperation with the network device. In embodiments of this application, an example in which the apparatus configured to implement the function of the network device is a network device is merely used for description, and constitutes no limitation on the solutions in embodiments of this application.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device with a wireless connection function. Currently, some examples of the terminal are: a mobile phone (mobile phone), a tablet computer, a notebook computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example instead of limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In this system, a terminal may be connected to a base station in a wireless manner. In a coverage range of a plurality of base stations, one terminal may be connected to the plurality of base stations, and obtain a transmission services of service data through the plurality of base stations. The base station may be connected to a core network device in a wireless or wired manner. The plurality of base stations may be connected to a same core network, or may be connected to different core networks. The core network device and the base station may be different independent physical devices, or a function of the core network device and a logical function of the base station may be integrated on a same physical device, or a physical device integrates some functions of the core network device and some functions of the base station. Base stations may be connected to each other in a wired or wireless manner.

In embodiments of this application, the network device and/or the terminal device may be deployed on land, including an indoor or outdoor device, or a handheld or vehicle-mounted device, or may be deployed on water, or may be deployed on an airplane, a balloon, or a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In the communication field, a dual connectivity technology is proposed in a communication system. The dual connectivity technology is that UE is connected to two base stations and performs data transmission with the two base stations.

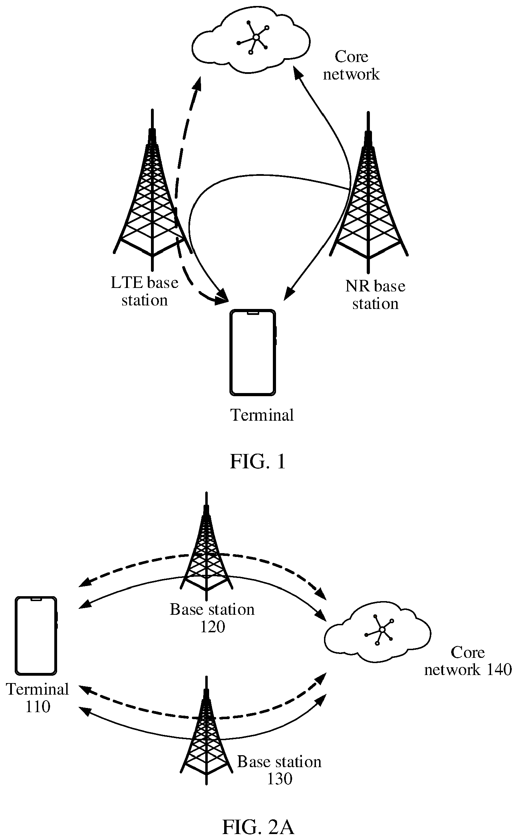

For example, FIG. 1 is a diagram of dual connectivity in a communication system. There is an LTE base station and an NR base station in the system, and the two base stations serve one UE. A dashed arrow in the figure indicates that a control plane connection is established between the UE and a network, and solid arrows in the figure indicate that data links are established between the UE and the network.

As shown in FIG. 1, after data is transmitted from a core network to the NR base station, the NR base station serving as a primary base station divides the data into two parts. One part is sent to the UE through an air interface of the NR base station, and the other part is sent to the LTE base station through an interface between the base stations and then is sent to the UE through an air interface of the LTE base station. In this case, the LTE base station serving as a secondary base station cooperates with the primary base station to complete data transmission.

It can be learned that, an existing dual connectivity mechanism requires that an interface exists between base stations, a primary base station and a secondary base station perform necessary negotiation to complete UE configuration, and data splitting is performed between the base stations. However, in some specific scenarios, there may be no available interface between base stations, or base stations do not support dual connectivity.

This application provides a core network splitting architecture. UE may separately perform data transmission with a core network through two base stations. In addition, the UE separately establishes control plane connections to a core network through the two base stations. There may be one or two core networks. A base station type may be an LTE base station, an NR base station, or even a satellite.

The control plane connection further includes a non-access stratum (non-access stratum, NAS) connection between the UE and the core network, and a radio resource control (radio resource control, RRC) layer connection between the UE and the base station.

FIG. 2A to FIG. 2C are diagrams of core network splitting scenarios to which a method according to an embodiment of this application is applicable. As shown in FIG. 2A, a communication system 100 may include a network device and a terminal device 110. The network device may include a base station 120, a base station 130, and a core network device 140. The two base stations are connected to the same core network.

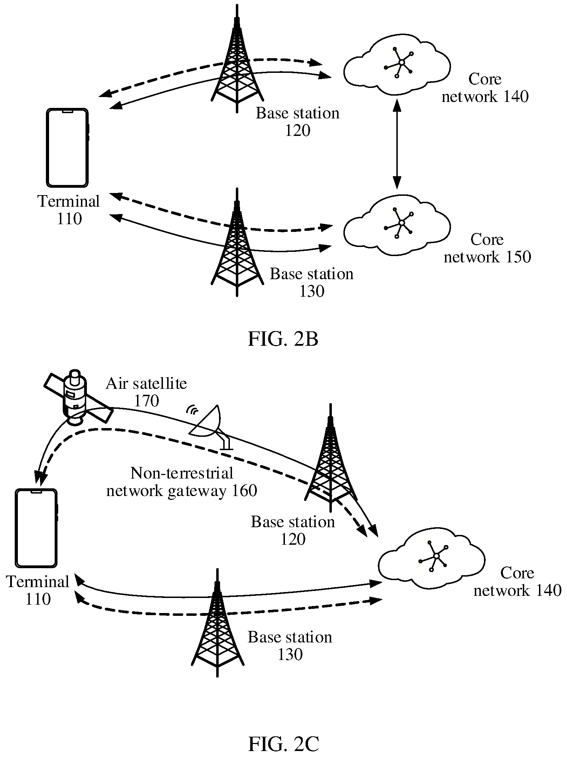

As shown in FIG. 2B, the communication system 100 further includes two core network devices, such as a core network device 140 and a core network device 150. The two base stations are connected to different core networks.

As shown in FIG. 2C, the communication system 100 further includes a non-terrestrial network gateway (non-terrestrial network gateway, NTN gateway) 160 and an air satellite 170. The NTN gateway may also be referred to as a satellite station.

In this embodiment of this application, the two base stations connected to the UE may both be NR base stations, or may both be LTE base stations, or may be an NR base station and an LTE base station. An air interface standard is not limited herein. In addition, a base station type is not limited. For example, the two base stations may both be terrestrial base stations, or may both be satellites, or may be a terrestrial base station and a satellite.

In an existing dual connectivity technology, two base stations serving UE are classified into a primary base station and a secondary base station. The primary base station configures the secondary base station for the UE, so that the two base stations simultaneously serve the UE, thereby effectively improving a rate and reliability of the UE.

Specifically, the primary base station determines which services of the UE are to be borne by the secondary base station, or which services are to be borne by both the primary base station and the secondary base station. Similarly, because a UE capability is fixed, when the UE needs to be simultaneously connected to the primary base station and the secondary base station, a UE capability usable by the primary base station and the secondary base station also needs to be appropriately allocated. In an existing mechanism, capability allocation is led by the primary base station.

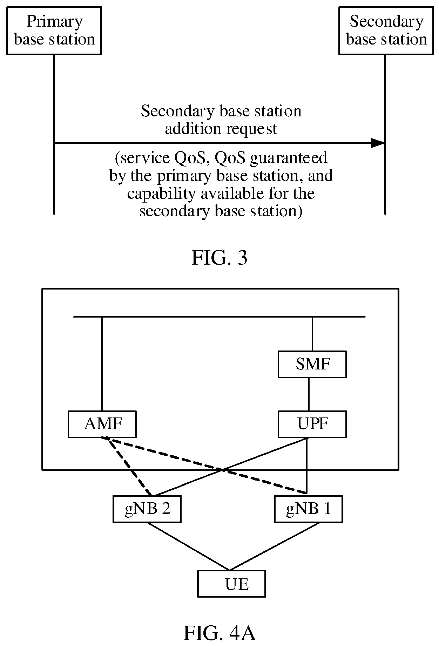

For example, the primary base station notifies the secondary base station of a quality of service (quality of service, QoS) parameter corresponding to a service on the UE, for example, a total rate currently required by the service, and notifies the secondary base station of a rate that can be guaranteed by the primary base station. Correspondingly, a rate that needs to be guaranteed by the secondary base station is obtained by subtracting the rate guaranteed by the primary base station from the total rate currently required by the service. FIG. 3 is a diagram of a process of negotiating QoS and a UE capability.

In an implementation process, the rate that can be guaranteed by the primary base station is evaluated by the primary base station based on a UE capability allocated by the primary base station. Therefore, information sent by the primary base station to the secondary base station further includes UE capability information currently usable by the secondary base station, and the UE capability usable by the secondary base station may be understood as a remaining UE capability obtained by subtracting a UE capability to be used by the primary base station from a total UE capability.

In the existing dual connectivity technology, the primary base station makes decisions on dual connectivity initiation, a service splitting manner, and UE capability negotiation. Therefore, the primary base station can implement better matching between the splitting manner and UE capability allocation based on a simple algorithm, thereby improving UE experience.

It can be learned that all decisions in a dual connectivity scenario are made by the primary base station. However, in the core network splitting scenario provided in this application, splitting is decided by the core network, the base station is unaware of the splitting, and the core network is unaware of an air interface capability of the UE. As a result, a splitting proportion decided by the core network mismatches with UE capability division under the two base stations, so that the UE cannot obtain an expected rate gain.

Therefore, a method provided in this application for matching the splitting proportion decided by the core network with air interface capability division of the UE in the core network splitting architecture maximizes the rate of the UE.

In this embodiment, a core network device includes a plurality of network elements, for example, an access and mobility management function (access and mobility management function, AMF) network element, a session management function (session management function, SMF) network element, and a user plane function (user plane function, UPF) network element, which are all main network functions of a core network in the system.

The SMF network element is mainly responsible for determining a splitting decision. The UPF network element performs data splitting according to the splitting policy. The AMF network element is mainly responsible for sending, to a base station, the splitting policy determined by the SMF, and sending the splitting policy to UE through NAS signaling.

The network element in this application may also be referred to as an entity or a functional entity. For example, the AMF network element may also be referred to as an AMF entity or an AMF functional entity. For another example, the SMF network element may also be referred to as an SMF entity or an SMF functional entity.

It may be understood that names of the network elements in this application are not limited to the scope of this application, and may also have other names.

For example, the SMF is merely an example name of a network element, an entity, or a device that is in the core network and that is responsible for determining the splitting decision. Any network element, entity, or device that has the function or a similar function should fall within the protection scope of the SMF in this application regardless of how a name of the network element, entity, or device is defined.

For another example, the AMF is merely an example name of a network element, an entity, or a device that is in a core network and that is responsible for forwarding the splitting decision to a base station and/or a terminal. Any network element, entity, or device that has the function or a similar function should fall within the protection scope of the AMF in this application regardless of how a name of the network element, entity, or device is defined.

For still another example, the UPF is merely an example name of a network element, an entity, or a device that is in a core network and that is responsible for performing service data transmission between a data network and a terminal. Any network element, entity, or device that has the function or a similar function should fall within the protection scope of the UPF in this application regardless of how a name of the network element, entity, or device is defined.

In this embodiment of this application, core network data splitting may be understood as splitting the service data in the core network. FIG. 4A to FIG. 4C are diagrams of service data splitting in a core network according to an embodiment of this application.

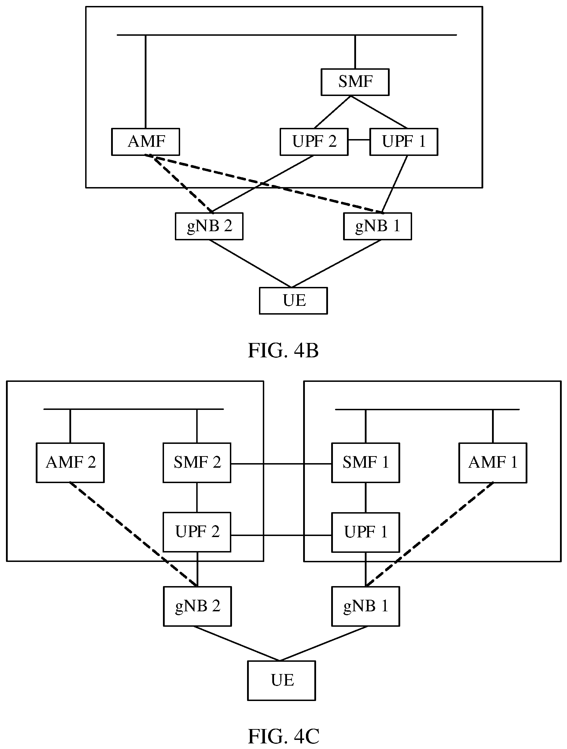

FIG. 4A, FIG. 4B, and FIG. 4C are respectively diagrams of connections of devices to which core network data splitting is applicable.

In FIG. 4A, two base stations are connected to a same AMF and/or a same SMF, and are connected to a same UPF. UE may establish connections to the two base stations. Specifically, the UE may separately establish connections to a gNB 1 and a gNB 2, and the gNB 1 and the gNB 2 are connected to a same UPF, a same AMF, and a same SMF.

Different from FIG. 4A, in FIG. 4B, two base stations are connected to different UPFs. Specifically, a gNB 1 is connected to a UPF 1, a gNB 2 is connected to a UPF 2, and the UPF 1 and the UPF 2 are connected to a same SMF.

Different from FIG. 4B, in FIG. 4C, two core networks are included, and two base stations are respectively connected to AMFs, SMFs, and UPFs in different core networks. Specifically, a gNB 1 is connected to a UPF 1 and an AMF 1, a gNB 2 is connected to a UPF 2 and an AMF 2, the UPF 1 is connected to the SMF 1, and the UPF 2 is connected to the SMF 2.

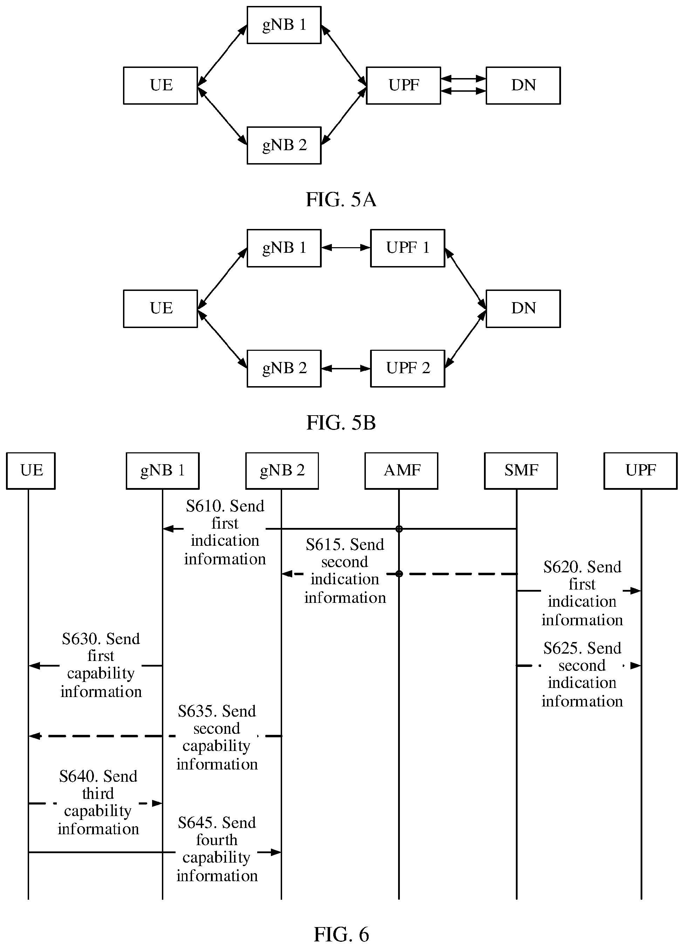

Optionally, core network data splitting is also implemented on a data network (data network, DN) side. FIG. 5A and FIG. 5B are diagrams of splitting in a data network.

In FIG. 5A, a UPF performs data splitting (downlink) and aggregation (uplink). For example, a DN transmits service data to the UPF. After receiving the service data from the DN, the UPF splits the service data to a gNB 1 and a gNB 2.

In FIG. 5B, a DN performs data splitting (downlink) and aggregation (uplink), where the data network may also be understood as an application server. For example, the DN separately transmits a part of service data of UE to a UPF 1 and a UPF 2. After receiving the part of service data from the DN, the UPF 1 transmits the part of service data to a gNB 1. After receiving the other part of service data from the DN, the UPF 2 transmits the other part of service data to a gNB 2.

In this application, core network data splitting and data network/server data splitting are not distinguished. For ease of description subsequently, only the core network data splitting is used as an example for description.

An example scenario to which a communication method in embodiments of this application is applicable is as follows: UE first performs service transmission through a network device 1. For example, the UE sends service data to and receives service data from a UPF 1 in UPFs through the network device 1, where the UE, the network device 1, and the UPF 1 herein may be referred to as a path 1. For the path 1, a protocol data unit (protocol data unit, PDU) session may be first established between an AMF 1 in AMFs and the network device 1 for a service. For example, the AMF 1 sends information about the PDU session corresponding to the service to the network device 1, including an aggregate maximum bit rate (aggregate maximum bit rate, AMBR) of the PDU session and/or information about at least one QoS flow included in the PDU session. The AMBR may be an upper limit of a total rate of all non-GBR QoS flows included in the PDU session. The information about the QoS flow may include an identifier of each QoS flow and a QoS parameter. For a GBR QoS flow, the QoS parameter includes at least an uplink guaranteed rate, a downlink guaranteed rate, an uplink maximum rate, and a downlink maximum rate. For ease of description, a transmission rate of the QoS flow refers to the foregoing rates, and descriptions are not distinguished. Subsequently, the UE may establish a connection to a network device 2 based on an indication of the network device 1, an indication of the AMF 1, or an indication of an SMF, then establish a connection to a UPF 2 in the UPFs through the network device 2, and sends data and receives data, where the UE, the network device 2, and the UPF 2 herein may be referred to as a path 2.

Because data sending and receiving by the UE through the network device 2 and the UPF 2 should be originally performed by the UE through the network device 1 and the UPF 1, but the data sending and receiving are finally performed by the UE through the network device 2 and the UPF 2, in embodiments of this application, a behavior of sending and receiving this part of service data by the UPF 2 and the network device 2 is referred to as data migration or data splitting, and this part of data is referred to as data migrated or split from the path 1 to the path 2.

In this application, the PDU session information or the QoS parameter respectively on the path 1 and the path 2 are referred to as a splitting policy. The splitting policy includes at least one of the following policies: (1) Splitting a part of data of a PDU session or of one or more QoS flows in a PDU session to another path for transmission. (2) Migrating some QoS flows in a PDU session from one path to another path for transmission.

The following describes, with reference to a specific example, how communication devices cooperate with each other to implement the splitting policy.

FIG. 6 is a schematic flowchart of a communication method according to an embodiment of this application. In FIG. 6, different network elements are marked with circles to indicate that transparent transmission is performed through the network elements, that is, data information may be forwarded and transmitted through the network element without any processing.

As shown in FIG. 6, the method includes S610 to S640.

S610. An SMF sends first indication information to a network device 1. Correspondingly, the network device 1 receives the first indication information.

The first indication information indicates transmission of a first QoS flow to be stopped in a first PDU session, transmission of a second QoS flow to be added to the first PDU session, or an updated QoS parameter of a third QoS flow in the first PDU session, and the first PDU session is a PDU session for transmission of service data of the first terminal through the first network device. It may be understood that the first indication information may also be referred to as a splitting policy.

In some possible implementations, that the first indication information indicates transmission of the first QoS flow to be added in the first PDU session may be understood as: terminating, suspending, deleting, or deactivating one or more QoS flows in the first PDU session, where the one or more QoS flows are referred to as the first QoS flow.

That the first indication information indicates transmission of the first QoS flow to be added in the first PDU session may include: The first indication information includes an identifier of the first QoS flow and indication information indicating to stop the QoS flow for transmission.

After transmission of the first QoS flow is stopped in the first PDU session, to ensure service experience of UE, service data that should be originally transmitted using the first QoS flow may be migrated or split to another network device, for example, a network device 2.

In some possible implementations, that the first indication information indicates transmission of the second QoS flow to be added to the first PDU session may be understood as: adding one or more new QoS flows to the first PDU session, or activating one or more QoS flows in a deactivated state or a suspended state in the first PDU session, where the one or more QoS flows are referred to as the second QoS flow.

That the first indication information indicates transmission of the second QoS flow to be added to the first PDU session may include: The first indication information includes an identifier of the second QoS flow and indication information indicating to add the QoS flow for transmission.

Data transmitted using the second QoS flow for transmission to be added to the first PDU session may be service data that should be originally transmitted using a QoS flow in another network device (for example, a network device 2), or may be service data that is migrated or split through a QoS flow in another network device (for example, a network device 2).

In some possible implementations, when the first indication information indicates the updated QoS parameter of the third QoS flow in the first PDU session, the updated QoS parameter may be better than the QoS parameter before updating, or the QoS parameter before updating may be better than the updated QoS parameter.

That the updated QoS parameter is better than the QoS parameter before updating may be understood as migrating or splitting service data in a QoS flow in another network device (for example, a network device 2) to the third QoS flow. That the QoS parameter before updating is better than the updated QoS parameter may be understood as migrating or splitting service data in the third QoS flow to a QoS flow in another network device (for example, a network device 2).

For example, when the QoS parameter includes a rate, that the updated QoS parameter is better than the QoS parameter before updating may be understood as: An updated rate is greater than a rate before updating.

In some possible implementations, the first indication information may indicate a splitting proportion, for example, indicate a proportion of a rate at which the first PDU session continues to be used for data transmission on a path of the network device 1 to an original rate.

For example, if an AMBR of the first PDU session on an original path 1 is 100 Mbps, and the first indication information indicates that the splitting proportion is 30%, it indicates that a current AMBR of the first PDU session should be 70 Mbps, and an AMBR that is split on another transmission path is 30 Mbps.

In some possible implementations, the splitting proportion included in the first indication information may further indicate a proportion of a rate at which each of one or more QoS flows in the first PDU session continues to be used for data transmission on a path of the network device 1 to an original rate.

For example, one identifier of one QoS flow may correspond to one piece of proportion information, so that different splitting policies are used for different QoS flows.

For example, if a transmission rate of a QoS flow is 2 Mbps, and a proportion is currently indicated as 30%, it indicates that the network device 1 currently needs to provide a rate of 0.6 Mbps for the QoS flow.

In some possible implementations, the first indication information is carried in a PDU session update message or a QoS flow information update message.

That the SMF sends the first indication information to the network device 1 may include: The SMF send the first indication information to the network device 1 through an AMF.

For example, the AMF indicates, to the gNB 1, an AMBR of a PDU session and a transmission rate of the QoS flow after the splitting, or indicates a base station to delete one or more QoS flows in the PDU session. In addition, to trigger subsequent behavior of the base station, the SMF may indicate that a reason for triggering updating by the network device 1 is that core network splitting is triggered.

S615. The SMF sends second indication information to the network device 2. Correspondingly, the network device 2 receives the second indication information sent by the SMF. The second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, and the second PDU session is a PDU session for transmission of service data of the first terminal through the network device 2 and a UPF 2.

In some possible implementations, that the second indication information indicates transmission of the fifth QoS flow to be stopped in the second PDU session may be understood as: terminating, suspending, deleting, or deactivating one or more QoS flows in the second PDU session, where the one or more QoS flows are referred to as the fifth QoS flow.

That the second indication information indicates transmission of the fifth QoS flow to be stopped in the second PDU session may include: The second indication information includes an identifier of the fifth QoS flow and indication information indicating to stop the QoS flow for transmission.

After transmission of the second QoS flow is stopped in the fifth PDU session, to ensure transmission performance of service data of the UE, service data that should be originally transmitted using the fifth QoS flow may be migrated or split to another network device, for example, the network device 1.

For example, service data that should be originally transmitted using the fifth QoS flow is migrated to or split to the second QoS flow for transmission.

In some possible implementations, that the second indication information indicates transmission of the fourth QoS flow to be added to the second PDU session may be understood as: adding one or more new QoS flows to the second PDU session, or activating one or more QoS flows in a deactivated state or a suspended state in the second PDU session, where the one or more QoS flows are referred to as the fourth QoS flow.

That the second indication information indicates transmission of the fourth QoS flow to be added to the second PDU session may include: The second indication information includes an identifier of the fourth QoS flow and indication information indicating transmission of the QoS flow to be added.

Data transmitted using the fourth QoS flow for transmission to be added to the second PDU session may be service data that should be originally transmitted using a QoS flow in another network device (for example, the network device 2), or may be service data that is migrated or split through a QoS flow in another network device (for example, the network device 2).

For example, service data that should be originally transmitted using the first QoS flow is migrated to or split to the fourth QoS flow for transmission.

In some possible implementations, when the second indication information indicates the updated QoS parameter of the sixth QoS flow in the second PDU session, the updated QoS parameter may be better than the QoS parameter before updating, or the QoS parameter before updating may be better than the updated QoS parameter.

That the updated QoS parameter is better than the QoS parameter before updating may be understood as migrating or splitting service data in a QoS flow in another network device (for example, the network device 1) to the sixth QoS flow. For example, service data that should be originally transmitted using the third QoS flow is migrated to or split to the sixth QoS flow.

That the QoS parameter before updating is better than the updated QoS parameter may be understood as migrating or splitting service data in the sixth QoS flow to a QoS flow in another network device (for example, the network device 1). For example, service data that is transmitted using the sixth QoS flow is migrated to or split to the third QoS flow.

For example, that the SMF sends the second indication information to the network device 2 may include: The SMF send the second indication information to the network device 2 through the AMF.

For example, the second indication information may be that when the network device 2 establishes a path with the UE for transmitting the service data of the UE, the SMF may notify the network device 2 of service information through the AMF, where the service information includes PDU session information and an AMBR of a PDU session that correspond to the service, and the PDU session information includes QoS flow information.

For example, the PDU AMBR may be a value obtained through calculation based on a splitting proportion, and a transmission rate of a QoS flow is also a value obtained through calculation based on the splitting proportion. The QoS flow is also a QoS flow migrated from the path 1 to a path 2. In this case, the SMF does not need to additionally provide splitting policy information.

In some possible implementations, when a service connection is established between the SMF and the network device 2, the SMF sends, to the network device 2, complete information of a PDU session corresponding to the service. In this case, splitting policy information needs to be additionally provided, that is, the second indication information needs to be provided.

In this embodiment, it may be understood that S615 is an optional step.

S620. The SMF sends first indication information to a UPF. Correspondingly, the UPF receives the first indication information sent by the SMF.

In some possible implementations, content of the first indication information sent by the SMF to the UPF is consistent with content of the first indication information sent by the SMF to the network device 1 through the AMF. For example, the UPF initially transmits service data of the UE to the network device 1. After determining the splitting proportion, the SMF needs to notify the UPF of the splitting proportion, to control a behavior of sending data by the UPF to the network device 1.

S625. The SMF sends second indication information to the UPF. Correspondingly, the UPF receives the second indication information sent by the SMF.

In some possible implementations, content of the second indication information sent by the SMF to the UPF is consistent with content of the second indication information sent by the SMF to the network device 2 through the AMF.

It may be understood that, in this embodiment, an execution sequence of step S610, step S615, step S620, and step S625 is not limited.

S630. The network device 1 sends first capability information to the UE. Correspondingly, the UE receives the first capability information from the network device 1. The first capability information indicates a capability division recommendation provided by the network device 1 for the UE.

Optionally, the capability switching recommendation may include the following content: a UE capability required by the network device 1 and/or a UE capability required by the network device 2. The UE capability required by the network device 1 may be understood as a UE capability recommended for the network device 1 or the path 1, or a UE capability that can be allocated to the network device 1 or the path 1. The UE capability required by the network device 2 may be understood as a UE capability recommended for the network device 2 or the path 2, or a UE capability that can be allocated to the network device 2 or the path 2.

In this step, the network device 1 may determine, based on the obtained first indication information, a UE capability currently required to meet a currently required QoS requirement (a rate is used as an example). The network device 1 knows a total UE capability, and therefore can evaluate the currently required UE capability, and evaluate a UE capability that can be used by the network device 2.

In some possible implementations, the network device 1 may first obtain information about the network device 2, to better evaluate a capability division manner.

For example, the network device 1 may obtain the information about the network device 2 from the AMF, or may obtain the information about the network device 2 from the UE.

In some possible implementations, that the network device 1 obtains the information about the network device 2 from the AMF may be that the AMF notifies the network device 1 of the information about the network device 2 when the SMF sends the first indication information to the network device 1.

In some possible implementations, that the network device 1 obtains the information about the network device 2 from the UE may be that the UE notifies the network device 1 through RRC signaling after the UE accesses the network device 2.

For example, the information about the network device 2 may include one or more of the following information: an identifier of the network device 2, a type of the network device 2, a cell identifier of at least one cell in which the network device 2 provides a service for the UE, frequency information of a cell, bandwidth information of a cell, or band information of a cell. The type of the network device 2 may be an LTE base station, an NR base station, or an NTN.

In some possible implementations, after comprehensively considering the first indication information, a service requirement of the UE, an air interface capability of the UE, and the information about the network device 2, the network device 1 indicates the capability division recommendation to the UE.

For example, the capability division recommendation may include a capability that is currently to be used by the network device 1, including a bandwidth, a band combination, a quantity of multiple-input multiple-output (multiple-input multiple-output, MIMO) layers, an uplink power, a power sharing mode, and the like; or may be a capability that is currently available for another path, including a bandwidth, a band combination, an uplink power, a quantity of MIMO layers, an uplink power, a power sharing mode, and the like.

In S630, when the network device 1 sends the capability division recommendation to the UE, the network device 1 may be a base station on a primary path of the service data of the UE, and is referred to as an anchor base station.

Optionally, the communication method in this embodiment may further include S635.

S635. The network device 2 sends second capability information to the UE. Correspondingly, the UE receives the second capability information from the network device 2. The second capability information indicates a capability division recommendation provided by the network device 2 for the UE.

In this embodiment, for S635, refer to S630. For example, the network device 1 in S630 is replaced with the network device 2, and the first indication information in S630 is replaced with the second indication information. Therefore, details are not described herein again.

Optionally, the communication method in this embodiment may further include S640.

S640. The UE sends third capability information to the network device 1. Correspondingly, the network device 1 receives the third capability information from the UE.

In step S630, the capability division recommendation sent by the network device 1 to the UE may not be mandatory. Therefore, a capability division manner finally determined by the UE may be inconsistent with the recommendation of the network device 1. When the capability division recommendations are inconsistent, the UE needs to send a capability limitation or limited capability information to the network device 1.

Optionally, in step S630, the network device 1 may send a capability division command to the UE. In this case, the UE can only follow an instruction of the network device 1, perform capability division according to the instruction of the network device 1, and trigger step S640.

It may be understood that, the capability division command sent by the network device 1 to the UE may be unreasonable from a perspective of the UE. Therefore, after receiving the command, the UE may refuse to execute the command, further provide a recommendation of the UE, and update the command on the network device 1. Correspondingly, after receiving the capability division recommendation of the UE, the network device 1 may update the capability division command.

S645. The UE sends fourth capability information to the network device 2. Correspondingly, the network device 2 receives the fourth capability information from the UE. The fourth capability information indicates a capability limitation or limited capability information of the UE.

In some possible implementations, after the network device 1 provides the recommendation for the UE, the UE may provide the capability limitation or the limited capability information for the network device 2 based on the recommendation of the network device 1.

According to a conventional technology, the network device 2 obtains the total UE capability. However, in a scenario corresponding to this application, the UE needs to be connected to two base stations simultaneously. Therefore, a UE capability that is actually available to the network device 2 is limited. Therefore, the UE may notify the base stations of the capability limitation information or the limited capability information through an uplink message.

For example, the uplink message may include a currently actually available bandwidth, an actually available band combination or an available band in a band combination, a quantity of actually available MIMO layers, an actually available uplink power, an actually available power sharing mode, and the like.

In some possible implementations, the recommendation of the UE and the information about the network device 2 sent by the UE to the network device 1 may be in a message.

In this embodiment, after obtaining the splitting policy of the core network, the base station sends the capability division recommendation or the division command to the UE according to the splitting policy, to implement matching between the UE capability and the splitting policy, thereby maximizing a rate of the UE.

However, in this embodiment, the core network sends the splitting policy to the base station, and then the base station determines a capability division manner or provides a recommendation for the UE according to the splitting policy.

In the method in this embodiment, for example, after receiving the service data of the UE from a DN, the UPF may split the service data of the UE to the network device 1 and the network device 2 based on the first indication information and/or the second indication information, so that the network device 1 and the network device 2 may separately transmit the split data to the UE, and finally, all the service data split by the UPF is transmitted to the UE.

In another example, after receiving the service data of the UE from a DN, a UPF marked as a UPF 1 may split, based on the first indication information and/or the second indication information, the service data of the UE to the network device 1 and a UPF marked as a UPF 2. After receiving the service data split by the UPF 1, the UPF 2 transmits the service data to the network device 2, so that the network device 2 transmits the service data to the UE, and the network device 1 also transmits, to the UE, the service data that is split to the network device 1.

In another example, a UPF marked as a UPF1 receives a part of the service data of the UE from a DN, and may transmit the part of the service data to the network device 1; a UPF marked as a UPF 2 receives the other part of the service data of the UE from the DN, and may transmit the other part of the service data to the network device 1; the network device 2 transmits the service data to the UE, and the network device 1 also transmits the service data to the UE.

In the embodiment shown in FIG. 6, the splitting policy (that is, the first indication information and the second indication information) is provided to the network device, so that the network device determines a capability division manner or provides a recommendation for the UE according to the splitting policy. In some other embodiments, the core network may send the splitting policy to the UE through a NAS message, and the UE determines a capability division manner and notifies the network device of the capability division manner, to trigger a network to evaluate, based on a capability obtained through division, a QoS guarantee that can be provided.

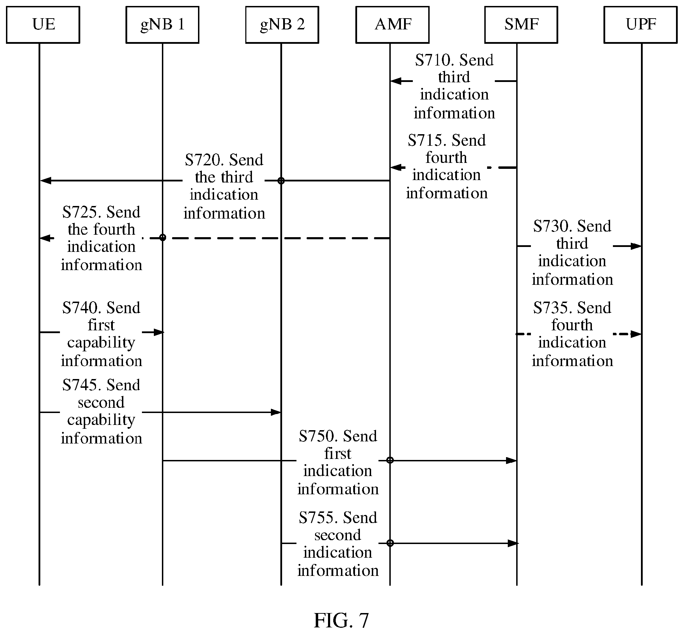

FIG. 7 is a schematic flowchart of a communication method according to an embodiment of this application. As shown in FIG. 7, the method includes S710 to S750.

S710. An SMF sends third indication information to an AMF. Correspondingly, the AMF receives the third indication information from the SMF.

In some possible implementations, for a meaning indicated by the third indication information in this step, refer to the meaning indicated by the first indication information in the embodiment shown in FIG. 6. Details are not described herein again.

S715. The SMF sends fourth indication information to the AMF. Correspondingly, the AMF receives the fourth indication information from the SMF.

In some possible implementations, for a meaning indicated by the fourth indication information in this step, refer to the meaning indicated by the second indication information in the embodiment shown in FIG. 6. Details are not described herein again.

S720. The AMF sends the third indication information to UE.

In some possible implementations, the third indication information is carried in NAS signaling.

That the AMF sends the third indication information to the UE may include: The AMF sends the third indication information to the UE through a network device 1.

S725. The AMF sends the fourth indication information to the UE.

In some possible implementations, the fourth indication information is carried in NAS signaling.

That the AMF sends the fourth indication information to the UE may include: The AMF sends the fourth indication information to the UE through a network device 2.

It may be understood that S715 and S725 are optional steps, because the AMF may alternatively send first indication information to the UE only through the network device 1, to indicate a splitting policy. When total service information remains unchanged, the UE may obtain, according to the splitting policy and based on the total service information, QoS information corresponding to service data transmitted through the network device 2.

S730. The SMF sends third indication information to a UPF. Correspondingly, the UPF receives the third indication information from the SMF.

For this step, refer to S620. Details are not described herein again.

S735. The SMF sends fourth indication information to the UPF. Correspondingly, the UPF receives the fourth indication information from the SMF.

For this step, refer to S625. Details are not described herein again.

S740. The UE sends first capability information to the network device 1, where the first capability information indicates a first capability that the UE recommends the network device 1 to use, and the first capability is a subset of a UE capability. Correspondingly, the network device 1 receives the first capability information from the UE.

In some possible implementations, the UE determines, based on the third indication information, to update capability information to a base station.

For example, after obtaining the third indication information from a core network, the UE determines, based on an indication of the third indication information, respective QoS requirements that need to be guaranteed on the network device 1 and the network device 2 (for example, respective transmission rates that need to be achieved on the network device 1 and the network device 2), and then evaluates UE air interface capabilities required to meet the QoS requirements on the two network devices, to perform UE capability division within a range of a total UE air interface capability, and separately notify the two base stations of available UE capabilities on the two paths.

For an implementation in which the UE determines the UE capability, refer to related content in the embodiment shown in FIG. 6. Details are not described herein again.

S745. The UE sends second capability information to the network device 2. Correspondingly, the network device 2 receives the second capability information from the UE.

For this step, refer to S740. Details are not described herein again.

S750. The network device 1 sends first indication information to a core network SMF network element, where the first indication information indicates at least one of the following information determined by the network device 1 based on the first capability information: transmission of a first QoS flow to be stopped in a first PDU session, transmission of a second QoS flow to be added to the first PDU session, or an updated QoS parameter of a third QoS flow in the first PDU session.

The second QoS flow and the third QoS flow may be referred to as QoS flows that can be currently guaranteed by the network device 1. It may be understood that, in this application, the QoS that can be currently guaranteed may also be understood as a QoS flow that can be currently served.

It may be understood that the first QoS flow determined by the network device 1 may be different from a first QoS flow determined by the SMF, the second QoS flow determined by the network device 1 may be different from a second QoS flow determined by the SMF, the third QoS flow determined by the network device 1 may be different from a third QoS flow determined by the SMF, or the QoS parameter of the third QoS flow determined by the network device 1 may be different from a QoS parameter of a third QoS flow determined by the SMF.

S755. The network device 2 sends second indication information to the core network SMF network element, where the second indication information indicates at least one of the following information determined by the network device 2 based on the second capability information: transmission of a fifth QoS flow to be stopped in a second PDU session, transmission of a fourth QoS flow to be added to the second PDU session, or an updated QoS parameter of a sixth QoS flow in the second PDU session.

The fourth QoS flow and the sixth QoS flow may be referred to as QoS flows that can be currently guaranteed by the network device 2.

It may be understood that the fourth QoS flow determined by the network device 2 may be different from a fourth QoS flow determined by the SMF, the fifth QoS flow determined by the network device 2 may be different from a fifth QoS flow determined by the SMF, the sixth QoS flow determined by the network device 2 may be different from a sixth QoS flow determined by the SMF, or the QoS parameter of the sixth QoS flow determined by the network device 2 may be different from a QoS parameter of a sixth QoS flow determined by the SMF.

In other words, the network device 1 and the network device 2 evaluate, based on a capability update/a limited UE capability reported by the UE, the QoS flow that can be currently guaranteed, and feed back the QoS flow to the core network.

For example, the network device 1 and the network device 2 separately obtain the limited capability reported by the UE, and evaluate, based on information like the UE capability, current load, and an air interface status of the UE, a current QoS guarantee that can be provided for the UE.

Optionally, the network device 1 and the network device 2 may report to the core network when evaluating that the QoS that can be currently guaranteed does not match a QoS requirement delivered by the core network.

From an implementation perspective, the core network may determine whether a QoS guarantee fed back by the base station matches the splitting policy. If a QoS guarantee fed back by the base station does not match the splitting policy, the splitting policy may be further adjusted.

In this embodiment, it is considered that the core network sends the splitting policy to the UE through a NAS message, and the UE determines a capability division manner, and notifies the base station of the capability division manner, to trigger the base station to evaluate, based on a capability obtained through division, a QoS guarantee that can be provided.

In this embodiment, the splitting policy is delivered to the UE, and the UE is triggered to perform UE capability division according to the splitting policy, so that an air interface transmission capability is caused to match the splitting policy of the core network, thereby maximizing a splitting gain.

In the foregoing two embodiments, after the core network first determines splitting policy information, the base station or the UE adaptively adjusts the UE capability division, to ensure that the UE capability division matches the splitting policy, to obtain a gain.

In the method in this embodiment, for example, after receiving service data of the UE from a DN, the UPF may split the service data of the UE to the network device 1 and the network device 2 based on the first indication information and/or the second indication information, so that the network device 1 and the network device 2 may separately transmit the split data to the UE, and finally, all the service data split by the UPF is transmitted to the UE.

In another example, after receiving the service data of the UE from a DN, a UPF marked as a UPF 1 may split, based on the first indication information and/or the second indication information, the service data of the UE to the network device 1 and a UPF marked as a UPF 2. After receiving the service data split by the UPF 1, the UPF 2 transmits the service data to the network device 2, so that the network device 2 transmits the service data to the UE, and the network device 1 also transmits, to the UE, the service data that is split to the network device 1.

In another example, a UPF marked as a UPF1 receives a part of the service data of the UE from a DN, and may transmit the part of the service data to the network device 1; a UPF marked as a UPF 2 receives the other part of the service data of the UE from the DN, and may transmit the other part of the service data to the network device 1; the network device 2 transmits the service data to the UE, and the network device 1 also transmits the service data to the UE.

In the embodiments shown in FIG. 6 and FIG. 7, after the core network first determines the splitting policy, the network device or the UE adaptively adjusts the UE capability, to ensure that the UE capability matches the splitting policy, to obtain a gain. In some embodiments, the UE may first perform capability division, thereby affecting the QoS that can be guaranteed by the network device, and further affecting the splitting policy of the core network.

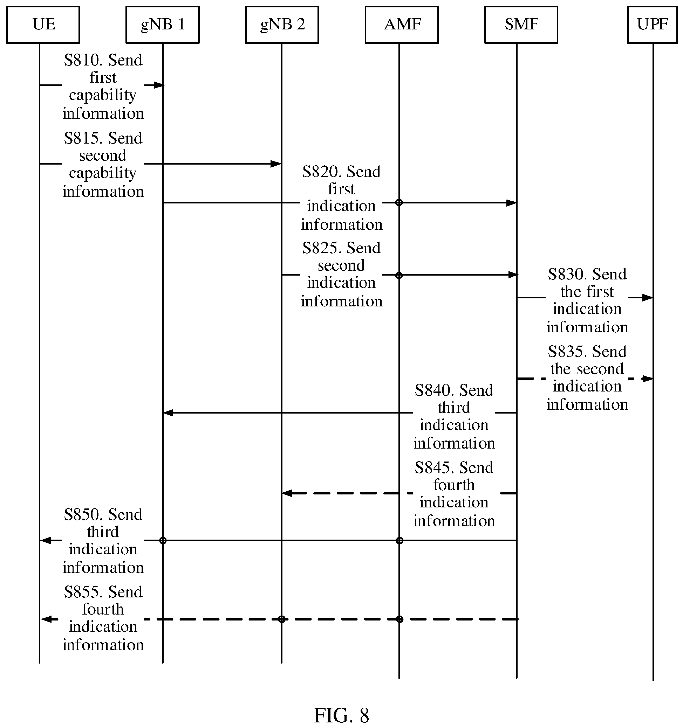

FIG. 8 is a schematic flowchart of a communication method according to an embodiment of this application. As shown in FIG. 8, the method includes S810 to S840.

S810. UE sends first capability information to a network device 1. Correspondingly, the network device 1 receives the first capability information. The first capability information indicates a first capability, the first capability is a UE capability required by the network device 1, the first capability is a subset of a total UE capability, the network device 1 is a network device in a first PDU session, and the first PDU session is a PDU session for transmission of service data of the UE.

S815. The UE sends second capability information to a network device 2. Correspondingly, the network device 2 receives the second capability information. The second capability information indicates a second capability, the second capability is a UE capability required by the network device 2, the second capability is a subset of the total UE capability, the network device 2 is a network device in a second PDU session, and the second PDU session is a PDU session for transmission of service data of the UE.

In some possible implementations, the UE may determine a currently available capability based on serving cells that are of the network device 1 and the network device 2 and that are currently accessed, divide the capability, and separately notify the network device 1 and the network device 2 of available UE capabilities after division.

S820. The network device 1 sends first indication information to an SMF, where the first indication information indicates at least one of the following information determined by the network device 1: transmission of a first QoS flow to be stopped in the first PDU session, transmission of the second QoS flow to be added to the first PDU session, or an updated QoS parameter of a third QoS flow in the first PDU session.

In other words, the network device 1 feeds back, to the SMF based on the first capability, QoS that can be currently guaranteed by the network device 1.

S825. The network device 2 sends second indication information to the SMF, where the second indication information indicates at least one of the following information determined by the network device 2: transmission of a fifth QoS flow to be stopped in the second PDU session, transmission of a fourth QoS flow to be added to the second PDU session, or an updated QoS parameter of a sixth QoS flow in the second PDU session.

In other words, the network device 2 feeds back, to the SMF based on the second capability, QoS that can be currently guaranteed by the network device 2.

S830. The SMF sends the first indication information to a UPF.

For details about this step, refer to step S730. Details are not described herein again.

S835. The SMF sends the second indication information to the UPF.

For details about this step, refer to step S735. Details are not described herein again.

S840. The SMF sends third indication information to the network device 1, where the third indication information indicates at least one of the following information determined by the SMF: transmission of a first QoS flow to be stopped in the first PDU session, transmission of a second QoS flow to be added to the first PDU session, or an updated QoS parameter of a third QoS flow in the first PDU session.

It may be understood that the first QoS flow determined by the network device 1 may be different from the first QoS flow determined by the SMF, the second QoS flow determined by the network device 1 may be different from the second QoS flow determined by the SMF, the third QoS flow determined by the network device 1 may be different from the third QoS flow determined by the SMF, or the QoS parameter of the third QoS flow determined by the network device 1 may be different from the QoS parameter of the third QoS flow determined by the SMF.

S845. The SMF sends fourth indication information to the network device 2, where the fourth indication information indicates at least one of the following information determined by the SMF: transmission of a fifth QoS flow to be stopped in the second PDU session, transmission of a fourth QoS flow to be added to the second PDU session, or an updated QoS parameter of a sixth QoS flow in the second PDU session.

It may be understood that the first QoS flow determined by the network device 1 may be different from the first QoS flow determined by the SMF, the second QoS flow determined by the network device 1 may be different from the second QoS flow determined by the SMF, the third QoS flow determined by the network device 1 may be different from the third QoS flow determined by the SMF, or the QoS parameter of the third QoS flow determined by the network device 1 may be different from the QoS parameter of the third QoS flow determined by the SMF.

S850. The SMF sends third indication information to the UE.

S855. The SMF sends fourth indication information to the UE.

In some possible implementations, after receiving information about the QoS that can be guaranteed and that is fed back by the network device 1 and the network device 2, the SMF determines a splitting policy based on the information.

For example, after the determining of the SMF, QoS of data that is split to each base station is within a range of QoS that can be guaranteed and that is fed back by each base station. After the determining, the splitting policy may be separately notified to the UPF, the two base stations, and the UE.

For example, for information indicated by the SMF to the UPF, refer to step S620. For information indicated by the SMF to the network device 1 and the network device 2, refer to step S610. For a manner and content of indicating splitting policy information by the SMF to the UE, refer to step S720. Details are not described herein again.

In this embodiment, it is considered that the UE first performs capability division, and the base station evaluates a QoS guarantee based on an updated UE capability, to assist a core network in determining the splitting policy, thereby implementing matching between an end-to-end splitting policy and an end-to-end capability division policy, and maximizing a rate gain.

The foregoing embodiments of this application are described by using a 5G system as an example. However, the technical solutions in embodiments of this application are not limited to being applicable only to the 5G system, and the solutions in the embodiments of this application may also be applicable to a future 6G network. For example, the 5G gNB may be replaced with a 6G base station, and the AMF and the UPF in a 5G core network may also be replaced with network elements with similar functions in a 6G core network.

In the embodiments shown in FIG. 6 to FIG. 8 of this application, a scenario in which two network devices are in a single core network is used.

For example, the method shown in any one of FIG. 6 to FIG. 8 may be applied to the communication system shown in FIG. 4B. The UE may be the UE in FIG. 4B, the network device 1 may be the gNB 1 in FIG. 4B, the network device 2 may be the gNB 2 in FIG. 4B, the UPF may be the UPF in FIG. 4B, the SMF may be the SMF in FIG. 4B, and the AMF may be the AMF in FIG. 4B.

However, actually, any embodiment in FIG. 6 to FIG. 8 is also applicable to a scenario of different core networks, for example, splitting is performed across a 5G system and a 6G system. In a cross-core network scenario, in addition to the interaction described in the foregoing embodiments, because two core networks are involved, the two SMFs between the core networks also need to exchange splitting policy information, and then data is split from one UPF to another UPF.

For example, the method shown in any one of FIG. 6 to FIG. 8 may be applied to the communication system shown in FIG. 4D. The UE may be the UE in FIG. 4D, the network device 1 may be the gNB 1 in FIG. 4D, the network device 2 may be the gNB 2 in FIG. 4D, the UPF may include the UPF 1 and the UPF 2 in FIG. 4D, the SMF may include the SMF 1 in FIG. 4D and the SMF 2 in FIG. 4D, and the AMF may include the AMF 1 in FIG. 4D and the AMF 2 in FIG. 4D.

In the method shown in any one of FIG. 6 to FIG. 8, that the SMF sends indication information to the UPF may include: The SMF 1 sends indication information (for example, the first indication information or the third indication information) to the UPF 1; and the SMF 1 sends indication information (for example, the second indication information or the fourth indication information) to the SMF 2, and the SMF 2 sends the indication information to the UPF 2.

In the method shown in any one of FIG. 6 to FIG. 8, that the SMF sends indication information (for example, the first indication information or the third indication information) to the AMF may include: The SMF 1 sends indication information to the AMF 1; and the SMF 1 sends indication information (for example, the second indication information or the fourth indication information) to the SMF 2, and the SMF 2 sends the indication information to the AMF 2.

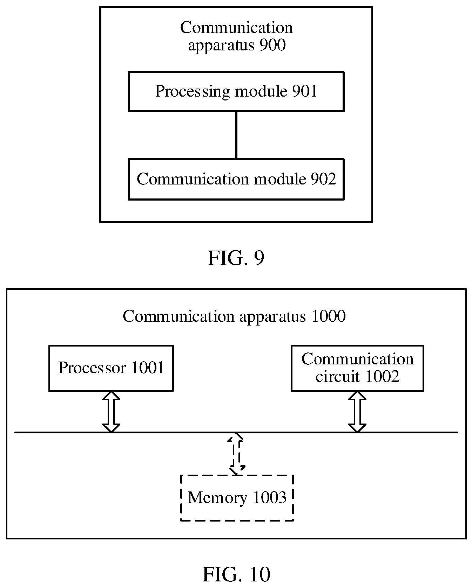

FIG. 9 is a diagram of a structure of a communication apparatus according to an embodiment of this application. As shown in FIG. 9, the apparatus 900 may include a processing module 901 and a communication module 902.

In a first example, the apparatus 900 may be configured to implement the communication method implemented by the terminal device in any one of the embodiments shown in FIG. 6 to FIG. 8. For example, the processing module 901 is configured to implement processing-related steps performed by the terminal device in any one of the embodiments shown in FIG. 6 to FIG. 8, and the communication module 902 is configured to implement steps such as sending and/or reception performed by the terminal device in any one of the embodiments shown in FIG. 6 to FIG. 8, for example, may be configured to perform S630, S635, S640, and S645 in FIG. 6, S720, S725, S740, and S745 in FIG. 7, and S810, S815, S850, and S855 in FIG. 8.

In a second example, the apparatus 900 may be configured to implement the communication method implemented by the network device in any one of the embodiments shown in FIG. 6 to FIG. 8. For example, the processing module 901 is configured to implement processing-related steps performed by the network device in any one of the embodiments shown in FIG. 6 to FIG. 8, and the communication module 902 is configured to implement steps such as sending and/or reception performed by the network device in any one of the embodiments shown in FIG. 6 to FIG. 8, for example, may be configured to perform S610 and S615 in FIG. 6, S740, S745, S750, and S755 in FIG. 7, and S810, S815, S820, S825, S840 and S845 in FIG. 8.

In a third example, the apparatus 900 may be configured to implement the communication method implemented by the core network device in any one of the embodiments shown in FIG. 6 to FIG. 8. For example, the processing module 901 is configured to implement processing-related steps performed by the core network device in any one of the embodiments shown in FIG. 6 to FIG. 8, and the communication module 902 is configured to implement steps such as sending and/or reception performed by the core network device in any one of the embodiments shown in FIG. 6 to FIG. 8, for example, may be configured to perform S610, S615, S620, and S625 in FIG. 6, S710, S715, S720, S725, S730, S735, S750 and S755 in FIG. 7, and S820, S825, S830, S835, S840, S845, S850 and S855 in FIG. 8.

FIG. 10 is a diagram of a structure of a communication apparatus according to another embodiment of this application. As shown in FIG. 10, the apparatus 1000 includes a processor 1001 and a communication circuit 1002. The processor 1001 and the communication circuit 1002 are coupled to each other. It may be understood that the communication circuit 1002 may be a transceiver or an input/output interface. Optionally, the communication apparatus 1000 may further include a memory 1003, configured to store instructions executed by the processor 1001, or store input data required for running instructions by the processor 1001, or store data generated after the processor 1001 runs instructions. It may be understood that the memory 1003 may be located outside the processor 1001, or may be located inside the processor 1001.

In an example, the processor 1001 is configured to implement the function of the foregoing processing module 901, and the communication circuit 1002 is configured to implement the function of the foregoing communication module 902.

The apparatus 1000 may be a communication device or may be a chip used in a communication device. For example, the apparatus 1000 may be a communication device or a chip used in a communication device. It may be understood that when the apparatus 1000 is a communication device, the communication circuit 1002 may be a transceiver.

Some embodiments of this application further provide a computer program product. When the computer program product is run on a processor, the method implemented by the communication device in any one of the foregoing embodiments may be implemented.

Some embodiments of this application further provide a computer-readable storage medium. The computer-readable storage medium includes computer instructions. When the computer instructions are run on a processor, the method implemented by the communication device in any one of the foregoing embodiments may be implemented.

Some embodiments of this application further provide a communication system. The system may implement the method implemented by the communication device in any one of the foregoing embodiments.

It may be understood that the processor in embodiments of this application may be the following device or all or some circuits configured to process a function in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random-access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first network device, wherein the method comprises:
receiving first indication information from a session management function SMF entity, wherein the first indication information indicates at least one of the following information: transmission of a first quality of service QoS flow to be stopped in a first protocol data unit PDU session, transmission of a second QoS flow to be added to the first PDU session, or an updated QoS parameter of a third QoS flow in the first PDU session, and the first PDU session is a PDU session for transmission of service data of the first terminal through the first network device; and
determining a first capability based on the first indication information, wherein the first capability is a capability that is of the first terminal and that is required by the first network device, and the first capability is a subset of a total capability of the first terminal.

2. The method according to claim 1, wherein the method further comprises:
sending first capability information to the first terminal, wherein the first capability information indicates the first capability.

3. The method according to claim 2, wherein the method further comprises:
receiving second capability information from the first terminal, wherein the second capability information indicates a capability that is determined by the first terminal and that is used to communicate with the first network device.

4. The method according to any one of claims 1 to 3, wherein the method further comprises:
receiving first information from the SMF entity, wherein the first information indicates that the first indication information is a splitting policy of a core network.

5. The method according to any one of claims 1 to 4, wherein the method further comprises:
receiving information about a second network device, wherein there is a communication connection between the second network device and the first terminal; and
the determining the first capability based on the first indication information comprises:
determining the first capability based on the first indication information and the information about the second network device.

6. A communication method, applied to a session management function SMF entity, wherein the method comprises:
determining first indication information, wherein the first indication information indicates at least one of the following information: transmission of a first quality of service QoS flow to be stopped in a first protocol data unit PDU session, transmission of a QoS flow to be added to the first PDU session, or an updated QoS parameter of a third QoS flow in the first PDU session, and the first PDU session is a PDU session for transmission of service data of the first terminal through a first network device and a first user plane function UPF entity; and
sending the first indication information to at least one of the first network device, the first terminal, a first mobility management AMF entity, and the first UPF entity, wherein the first AMF entity is an AMF entity associated with the first PDU session.

7. The method according to claim 6, wherein the method further comprises:
sending second indication information to at least one of a second network device, the first terminal, a second AMF entity, or a second UPF entity, wherein the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the second PDU session is a PDU session for transmission of the service data of the first terminal through the second network device and the second UPF entity, the second AMF entity is an AMF entity associated with the second PDU session, and there is a communication connection between the first UPF and the second UPF entity, or the first UPF and the second UPF entity are a same UPF entity.

8. The method according to claim 7, wherein the first AMF entity and the second AMF entity are a same AMF entity.

9. A communication method, applied to a first terminal, wherein the method comprises:
receiving first indication information from a session management function SMF entity, wherein the first indication information indicates at least one of the following information: transmission of a first QoS flow to be stopped in a first PDU session, transmission of a second QoS flow to be added to the first PDU session, or an updated QoS parameter of a third QoS flow in the first PDU session, and the first PDU session is a PDU session for transmission of service data of the first terminal through a first network device;
determining a first capability based on the first indication information, wherein the first capability is a capability that is of the first terminal and that is required by the first network device, and the first capability is a subset of a total capability of the first terminal; and
sending first capability information to the first network device, wherein the first capability information indicates the first capability.

10. The method according to claim 9, wherein the method further comprises:
receiving data that is in a seventh QoS flow and that is transmitted through the first network device, wherein the seventh QoS flow is a QoS flow in the first PDU session.

11. The method according to claim 9 or 10, wherein the method further comprises:
receiving second indication information from the SMF entity, wherein the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the fourth QoS flow is used for transmission of service data transmitted using the first QoS flow, the second QoS flow is used for transmission of service data transmitted using the fifth QoS flow, a QoS parameter difference between the updated QoS parameter of the sixth QoS flow and the QoS parameter before updating is used for transmission of service data transmitted using a QoS parameter difference between an updated QoS parameter of the first QoS flow and the QoS parameter before updating, or a QoS parameter difference between an updated QoS parameter of the first QoS flow and the QoS parameter before updating is used for transmission of service data transmitted using a QoS parameter difference between the updated QoS parameter of the sixth QoS flow and the QoS parameter before updating, and the second PDU session is a PDU session for transmission of the service data of the first terminal through a second network device;
determining a second capability based on the second indication information, wherein the second capability is a capability that is of the first terminal and that is required by the second network device, and the second capability is a subset of a total capability of the second terminal; and
sending second capability information to the second network device, wherein the second capability information indicates the second capability.

12. The method according to claim 11, wherein the method further comprises:
receiving data that is in an eighth QoS flow and that is transmitted through the second network device, wherein the eighth QoS flow is a QoS flow in the second PDU session.

13. A communication method, applied to a first network device, wherein the method comprises:
receiving first capability information from a first terminal, wherein the first capability information indicates a first capability, the first capability is a capability that is of the first terminal and that is required by the first network device, the first capability is a subset of a total capability of the first terminal, the first network device is a network device in a first protocol data unit PDU session, and the first PDU session is a PDU session for transmission of service data of the first terminal; and
sending first indication information to a session management function SMF entity based on the first capability information, wherein the first indication information indicates at least one of the following information determined by the first network device: transmission of a first quality of service QoS flow to be stopped in the first PDU session, transmission of a second QoS flow to be added to the first PDU session, or an updated QoS parameter of a third QoS flow in the first PDU session.

14. The method according to claim 13, wherein the method further comprises:
receiving third indication information from the SMF entity, wherein the third indication information indicates at least one of the following information determined by the SMF entity: transmission of the first QoS flow to be stopped in the first PDU session, transmission of the second QoS flow to be added to the first PDU session, or the updated QoS parameter of the third QoS flow in the first PDU session.

15. The method according to claim 13 or 14, wherein the method further comprises:
receiving data that is in a seventh QoS flow and that is transmitted through a first user plane function UPF entity, wherein the seventh QoS flow is a QoS flow in the first PDU session, and the first UPF entity is a UPF entity in the first PDU session; and
sending data in the seventh QoS flow to the first terminal.

16. A communication method, applied to a session management function SMF entity, wherein the method comprises:
receiving first indication information from a first network device, wherein the first indication information indicates at least one of the following information determined by the first network device: transmission of a first quality of service QoS flow to be stopped in a first protocol data unit PDU session, transmission of a second QoS flow to be added to the first PDU session, or an updated QoS parameter of a third QoS flow in the first PDU session, and the first PDU session is a PDU session for transmission of service data of the first terminal through the first network device and a first UPF entity; and
sending third indication information to the first user plane function UPF entity based on the first indication information, wherein the third indication information indicates at least one of the following information determined by the SMF entity: indication information of the first QoS flow, indication information of the second QoS flow, or the updated QoS parameter of the third QoS flow.

17. The method according to claim 16, wherein the method further comprises:
sending second indication information to a second UPF entity, wherein the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the second PDU session is a PDU session for transmission of the service data of the first terminal through a second network device and the second UPF entity, and there is a communication connection between the first UPF entity and the second UPF entity, or the first UPF entity and the second UPF entity are a same UPF entity.

18. A communication method, applied to a first user plane function UPF entity, wherein the method comprises:
receiving first indication information from a session management function SMF entity, wherein the first indication information indicates at least one of the following information: transmission of a first quality of service QoS flow to be stopped in a first protocol data unit PDU session, transmission of a second QoS flow to be added to the first PDU session, or an updated QoS parameter of a third QoS flow in the first PDU session, and the first PDU session is a PDU session for transmission of service data of the first terminal through the first UPF entity and a first network device;
receiving first service data from a data network DN, wherein the first service data is the service data of the first terminal; and
sending data in a seventh QoS flow to the first network device, wherein the data in the seventh QoS flow comprises the first service data, and the seventh QoS flow is a QoS flow in the first PDU session.

19. The method according to claim 18, wherein the method further comprises:
receiving second indication information from the SMF entity, wherein the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the fourth QoS flow is used for transmission of service data transmitted using the first QoS flow, the second QoS flow is used for transmission of service data transmitted using the fifth QoS flow, a QoS parameter difference between the updated QoS parameter of the sixth QoS flow and the QoS parameter before updating is used for transmission of service data transmitted using a QoS parameter difference between an updated QoS parameter of the first QoS flow and the QoS parameter before updating, or a QoS parameter difference between an updated QoS parameter of the first QoS flow and the QoS parameter before updating is used for transmission of service data transmitted using a QoS parameter difference between the updated QoS parameter of the sixth QoS flow and the QoS parameter before updating, and the second PDU session is a PDU session for transmission of the service data of the first terminal through the first UPF entity and a second network device;
receiving second service data from the DN, wherein the second service data is the service data of the first terminal; and
sending data in an eighth QoS flow to the second network device, wherein the data in the eighth QoS flow comprises the second service data, and the eighth QoS flow is a QoS flow in the second PDU session.

20. The method according to claim 18, wherein the method further comprises:
receiving second indication information from the SMF entity, wherein the second indication information indicates at least one of the following information: transmission of a fourth QoS flow to be added to a second PDU session, transmission of a fifth QoS flow to be stopped in the second PDU session, or an updated QoS parameter of a sixth QoS flow in the second PDU session, the fourth QoS flow is used for transmission of service data transmitted using the first QoS flow, the second QoS flow is used for transmission of service data transmitted using the fifth QoS flow, a QoS parameter difference between the updated QoS parameter of the sixth QoS flow and the QoS parameter before updating is used for transmission of service data transmitted using a QoS parameter difference between an updated QoS parameter of the first QoS flow and the QoS parameter before updating, or a QoS parameter difference between an updated QoS parameter of the first QoS flow and the QoS parameter before updating is used for transmission of service data transmitted using a QoS parameter difference between the updated QoS parameter of the sixth QoS flow and the QoS parameter before updating, and the second PDU session is a PDU session for transmission of the service data of the first terminal through a second UPF entity and a second network device;
receiving second service data from the DN, wherein the second service data is the service data of the first terminal; and
sending data in an eighth QoS flow to the second UPF entity, wherein the data in the eighth QoS flow comprises the second service data, and the eighth QoS flow is a QoS flow in the second PDU session.

21. The method according to any one of claims 1 to 20, wherein that the first indication information indicates transmission of the first QoS flow to be stopped in the first PDU session comprises: the first indication information comprises deactivation indication information of the first QoS flow, or indication information for deleting the first QoS flow;
that the first indication information indicates the updated QoS parameter of the third QoS flow comprises: the first indication information comprises at least one of the following information: a proportion of an updated AMBR of the second QoS flow to the AMBR before updating, a proportion of an updated transmission rate of the second QoS flow to the transmission rate before updating of the second QoS flow, the updated transmission rate of the second QoS flow, or the updated AMBR of the second QoS flow; and
that the first indication information indicates transmission of the second QoS flow to be added to the first PDU session comprises: the first indication information comprises activation indication information of the second QoS flow, or indication information for adding the second QoS flow.

22. A communication apparatus, comprising a functional module configured to implement the method according to any one of claims 1 to 21.

23. A communication apparatus, comprising a memory and a processor, wherein
the memory is configured to store program instructions; and
the processor is configured to execute the program instructions in the memory, to implement the method according to any one of claims 1 to 21.

24. A computer-readable storage medium, wherein the computer-readable storage medium stores program code to be executed by a computer, and the program code comprises instructions for implementing the method according to any one of claims 1 to 21.

25. A computer program product, wherein the computer program product comprises instructions for implementing the communication method according to any one of claims 1 to 21.
